# EUROPÄISCHE PATENTSCHRIFT

(11) **EP 1 475 278 B1**
(45) Veröffentlichungstag und Bekanntmachung des Hinweises auf die Patenterteilung: **22.03.2006**
(21) Anmeldenummer: 04010603.1
(22) Anmeldetag: 04.05.2004
(51) Int. Cl.: B60R 21/16

(54) **Gewebe für Luftsäcke und Gurtbänder mit Luftsäcken**
Fabric for airbags and seatbelts with airbags
Tissu pour airbags et ceintures de sécurité avec airbag

(30) Priorität: 06.05.2003 DE 10320120
(43) Veröffentlichungstag der Anmeldung: 10.11.2004
(73) Patentinhaber: Berger, Johann, 73553 Alfdorf (DE)
(72) Erfinder: Berger, Johann, 73553 Alfdorf (DE); Märtz, Josef, 85386 Eching (DE)
(74) Vertreter: Fischer, Matthias

(56) Entgegenhaltungen:
- EP-A- 0 819 581
- EP-A- 1 086 861
- DE-A- 19 859 767
- DE-A- 19 934 232
- US-A- 4 805 930
- US-A- 5 871 231

## Beschreibung

Die vorliegende Erfindung betrifft einen aufblasbaren gewebten Luftsack oder Luftgürtel.

Es sind Passagierrückhaltesysteme bekannt, die Luftsäcke oder Luftgürtel aufweisen, in welche in einer Crashsituation beim Aufblasen einer vorbestimmten Luftsack- oder Luftgürtelgröße eine vorbestimmte Gasmenge eingefüllt wird, obwohl nicht in jedem Fall die vorbestimmte Luftsackgröße zum Einsatz kommen kann, ja sogar teilweise nicht zum Einsatz kommen darf. Wird also beispielsweise eine vorbestimmte zu große Gasmenge in eine vorbestimmte zu kleine Luftsack- oder Luftgürtelgröße eingeblasen, führt dies zur Zerstörung des Luftsacks oder des Luftgürtels mit den entsprechenden negativen Folgen.

Aus der EP-A-0 819 581 ist ein Luftsack gemäß dem Oberbegriff von Anspruch 1 bekannt.

Der Erfindung liegt die Aufgabe zugrunde, einen aufblasbaren gewebten Luftsack oder Luftgürtel vorzuschlagen, bei dem die aus dem Stand der Technik bekannten Nachteile vermieden oder zumindest stark verringert werden.

Die Aufgabe wird gelöst mit einem aufblasbaren gewebten Luftsack oder Luftgürtel, bei dem in wenigstens einer Gewebelage (O, U) Abblasbereiche (X) angeordnet sind und das Gewebe in den Abblasbereichen (X) eine geringere Reißfestigkeit hat als das restliche Gewebe des Luftsacks oder Luftgürtels, dadurch gekennzeichnet, daß erste Kettfäden der Abblasbereiche (X) einen geringeren Titer als die restlichen Kettfäden haben. Hiermit ist es vorteilhafterweise möglich, bei einem etwaigen Überdruck in den zuvor ausgewählten Abblasbereichen Abblasöffnungen zu schaffen, da hier das Gewebe eine geringere Reißfestigkeit als im restlichen Gewebe des Luftsacks oder Luftgürtels hat. Damit wird bei einer vorbestimmten auftretenden Kraft beim Aufblasen ein vorprogrammiertes Abreißen einzelner erster Kettfäden ermöglicht, wodurch gezielt gewählte Überdrucköffnungen geschaffen werden können.

Ein ähnlicher ebenfalls vorteilhafter Effekt läßt sich durch die erfindungsgemäße Anordnung gemäß Anspruch 4 erreichen, bei der in den Abblasbereichen erste Bindungen mit geringerer Reißfestigkeit als im restlichen Gewebe des Luftsacks oder Luftgürtels angeordnet sind. Diese Konstruktion läßt in ausgewählten Flächen, Bindungsübergängen oder Abwebkanten - zusammengefaßt Abblasbereiche genannt - durch eine dem Anspruch gemäß webtechnisch ausgewählte schwächere Bindung eine Verschiebung von einzelnen Kettfäden zu, wodurch ebenfalls gezielt gewählte Abblasöffnungen geschaffen werden. Die aufgrund der erfindungsgemäßen Vorrichtung mögliche Schaffung von Mitteln zum Abbau eines durch beim Aufblasen des Luftsackes oder Luftgürtels entstehenden Überdrucks drohende Zerstörung wird bei Einsatz der erfindungsgemäßen Vorrichtung vermieden.

Es ergibt sich ein weiterer Vorteil dadurch, daß durch die genannten Maßnahmen die Möglichkeit gegeben ist, mit einem Gasgenerator mit einer vorbestimmten Gasmenge und einem vorbestimmten Druck das Volumen eines aufzublasenden Luftsacks oder Luftgürtels zu variieren.

Im folgenden wird die Erfindung anhand eines Ausführungsbeispiels unter Zuhilfenahme einer Zeichnung kurz beschrieben.
- Fig. 1: zeigt stark schematisiert einen Teil eines abgeschnitten dargestellten Luftgürtels in perspektivischer Darstellung.
- Fig. 2: zeigt stark schematisiert einen Luftgürtel nach dem Aufreißen von im Bereich X angeordneten ersten Kettfäden im Querschnitt.

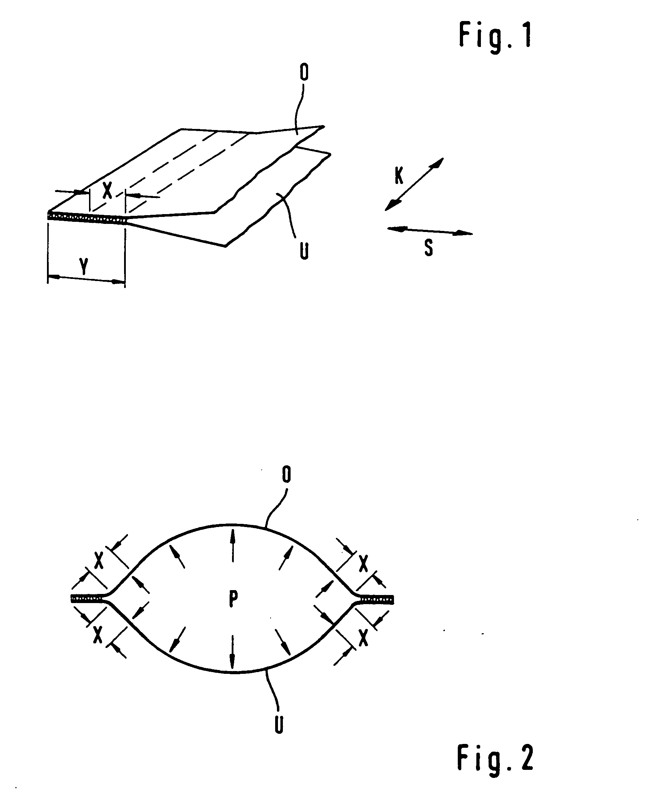

Fig. 1 zeigt einen zweilagigen gewebten Schlauch, der als Luftsack oder Luftgürtel Verwendung finden soll. Die Orientierung von Kett- und Schußfäden ist durch Doppelpfeile K und S angegeben. In einem Randbereich sind die beiden Gewebelagen, eine obere Gewebelage O und eine untere Gewebelage U in einer Kantenbreite Y miteinander verwebt, wobei im darin laufenden Kantenstreifen X folgende Besonderheit vorliegt: Es sind dort als z.B. jeweils fünfte Fäden erste Kettfäden in Leinwandbindung eingearbeitet, die (Fig. 2) dann aufreißen, wenn der Schlauch mit einem vorbestimmten Druck P aufgeblasen wird.

Dabei verringert sich die ursprüngliche, die obere mit der unteren Lage verbindende Kante auf die Breite Y minus X. Das hat zur Folge, daß im Abblasbereich X jeder fünfte erste Kettfaden im Gewebe fehlt und an den entsprechenden "Fehlstellen" im Gewebe des Schlauchs kleine Löcher entstehen, durch die im aufgeblasenen Luftsack oder Luftgürtel befindliches Gas abgeblasen werden kann. Aufgrund dieser Maßnahmen besteht die Möglichkeit, mit einem Gasgenerator mit vorbestimmter Gasmenge und vorbestimmten Druck das Volumen eines aufzublasenden Luftsacks oder Luftgürtels zu variieren.

## Patentansprüche

1. Aufblasbarer gewebter Luftsack oder Luftgürtel, bei dem
a) in wenigstens einer Gewebelage (O, U) Abblasbereiche (X) angeordnet sind und
b) das Gewebe in den Abblasbereichen (X) eine geringere Reißfestigkeit hat als das restliche Gewebe des Luftsacks oder Luftgürtels, **dadurch gekennzeichnet, daß** erste Kettfäden der Abblasbereiche (X) einen geringeren Titer als die restlichen Kettfäden haben.

2. Luftsack oder Luftgürtel nach Anspruch 1, **dadurch gekennzeichnet, daß** die Abblasbereiche (X) vorzugsweise im Randbereich der Gewebelage (O, U) angeordnet sind.

3. Luftsack oder Luftgürtel nach Anspruch 1 oder 2, **dadurch gekennzeichnet, daß** in den Abblasbereichen (X) erste Bindungen mit geringerer Reißfestigkeit als im restlichen Gewebe des Luftsacks oder Luftgürtels angeordnet sind.

4. Luftsack oder Luftgürtel nach Anspruch 1, 2 oder 3, **dadurch gekennzeichnet, daß** die Reißfestigkeit des Gewebes, der ersten Kettfäden oder der ersten Bindungen so eingestellt ist, daß das Gewebe beim Aufblasen bei einer vorbestimmten Kraft in den Abblasbereichen (X) wenigstens teilweise aufreißt.

## Claims

1. An inflatable woven air bag or air belt wherein
a) deflatable zones (X) are arranged in at least one fabric ply (O, U) and
b) the fabric in said deflatable zones (X) has a lower tear strength than the remaining fabric of said air bag or air belt, **characterized in that** first warp threads of said deflatable zones (X) have a lower titre than the remaining warp threads.

2. The air bag or air belt as set forth in claim 1, **characterized in that** said deflatable zones (X) are preferably arranged in the edge portion of said fabric ply (O, U).

3. The air bag or air belt as set forth in claim 1 or 2, **characterized in that** arranged in said deflatable zones (X) are first weaves having a lower tear strength than the remaining fabric of said air bag or air belt.

4. The air bag or air belt as set forth in claim 1, 2 or 3, **characterized in that** the tear strength of said fabric, of said first warp threads or of said first weaves is set so that the fabric tears, at least in part, on inflation for a predefined force in said deflatable zones (X).

## Revendications

1. Airbag ou ceinture de sécurité avec airbag tissés, gonflables, dans lequel/laquelle
a) des zones de décharge (X) sont disposées dans au moins une couche de tissu (O, U) et
b) le tissu dans les zones de décharge (X) présente une résistance à la déchirure inférieure à celle du tissu restant de l'airbag ou de la ceinture de sécurité avec airbag, **caractérisé**/e en ce que de premiers fils de chaîne des zones de décharge (X) présentent un titre moindre par rapport à celui des fils de chaîne restants.

2. Airbag ou ceinture de sécurité avec airbag selon la revendication 1, **caractérisé**/e en ce que les zones de décharge (X) sont disposées de préférence dans la zone de bord de la couche de tissu (O, U).

3. Airbag ou ceinture de sécurité avec airbag selon la revendication 1 ou 2, **caractérisé**/e en ce que dans les zones de décharge (X), de premières liaisons ayant une résistance à la déchirure moindre par rapport à celle du tissu restant de l'airbag ou de la ceinture de sécurité avec airbag sont disposées.

4. Airbag ou ceinture de sécurité avec airbag selon les revendications 1, 2 ou 3, **caractérisé**/e en ce que la résistance à la déchirure du tissu, des premiers fils de chaîne ou des premières liaisons est réglée de manière à ce que le tissu se déchire du moins partiellement au gonflement à une force prédéterminée dans les zones de décharge (X).
